# EUROPEAN PATENT SPECIFICATION

(11) **EP 2 339 325 B1**
(45) Date of publication and mention of the grant of the patent: **21.11.2012**
(21) Application number: 10196801.4
(22) Date of filing: 23.12.2010
(51) Int. Cl.: G01N 17/02, G01N 17/04

(54) **Corrosion sensor for outdoor structure**
Korrosionssensor für Außenstruktur
Capteur de corrosion pour une structure extérieure

(30) Priority: 28.12.2009 JP 2009298894; 28.12.2009 JP 2009298895
(43) Date of publication of application: 29.06.2011
(73) Proprietor: Mitsubishi Heavy Industries, Tokyo 108-8215 (JP)
(72) Inventor: Dobashi, Shinsaku, Tokyo 108-8215 (JP); Tsukahara, Chisato, Tokyo 108-8215 (JP); Takeda, Kazuhiro, Tokyo 108-8215 (JP); Okano, Yasushi, Tokyo 108-8215 (JP); Notomi, Ryosuke, Tokyo 108-8215 (JP)
(74) Representative: Intès, Didier Gérard André

(56) References cited:
- US-A- 3 840 439
- US-A- 6 132 593

## Description

The present invention relates to an outdoor structure including a corrosion detecting device capable of predicting an amount of corrosion caused by salt damage or the like.

### [Background Art]

Because an outdoor structure such as a windmill is installed on a sea or on a coast, there is a concern that external coating of the windmill as well as a transformer, a control board and the like provided in the windmill corrode due to salt damage.
Therefore, it is necessary to make salt damage prediction suited for an internal material and coating of a device.

There is established an evaluation method, such methods of JIS Z2371 "Salt Water Spray Test Method" and JIS K5621 "Combined Cycle Test" (Non patent Literatures 1 and 2).

Moreover, there is recently proposed a corrosion sensor as a sensor that predicts an amount of corrosion resulting from salt damage (Patent Literature 1).

This corrosion sensor is explained. When two dissimilar metals (a substrate and a conductive unit) are made into a state of being isolated from each other by an insulating unit and ends of the both metals are exposed to environment, a water film connects the both metals to each other according to the environment. As a result, an electromotive force is generated and a corrosion current flows. Because this current corresponds to a corrosion rate of a base metal, this sensor is used as a corrosion sensor sensing the corrosion of the base metal.

This sensor is referred to as "atmospheric corrosion monitor" or "ACM corrosion sensor".

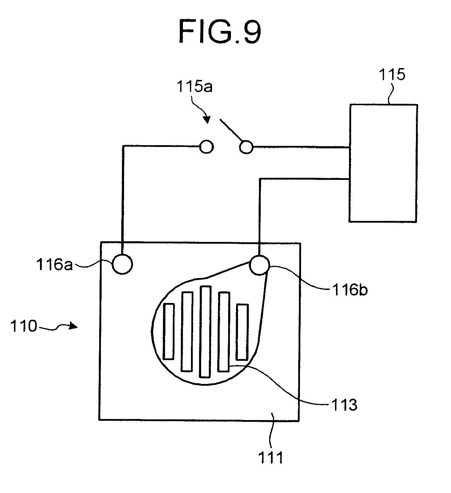

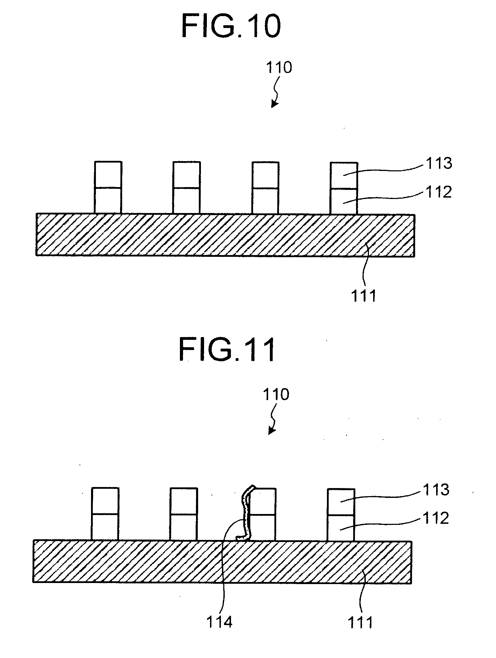

Figs. 9 to 11 depict an example of the sensor. As shown in Figs. 9 and 10, an ACM corrosion sensor (hereinafter, "the corrosion sensor") 110 includes a 111 obtained by cutting down a carbon steel plate having a thickness of 0.8 millimeter into 64 mm × 64 mm, an insulating unit 112 made of an insulating paste (thickness of 30 to 35 micrometers: SiO₂) is coated on this substrate 111 using a thick-film IC precision screen printer and hardened.
Next, a conductive paste (thickness of 30 to 40 micrometers, filler: Ag) is laminated and printed on a pattern of the insulating unit 112 so as to keep insulation from the substrate 111, and hardened to form conductive units 113, thereby constituting the corrosion sensor (Non patent Literature 3).
In this case, the substrate 111 is defined as a first conductive unit and a plurality of the conductive units 113 are defined as linear second conductive units provided at predetermined intervals.

Furthermore, as shown in Fig. 11, a water film 114 due to humidity, sea salt (such as chloride ions) or the like short-circuits the conductive units 113 to the substrate 111, and an ammeter 115 measures a corrosion current of a galvanic pair of Fe-Ag resulting from the short-circuiting. In Fig. 9, reference characters 116a and 116b denote terminals. An exposed portion of a surface of the carbon steel plate (Fe) serves as an anode (a positive electrode) and the conductive paste (Ag) serves as a cathode (a negative electrode).
Because the corrosion current of this galvanic pair correlates to amounts of corrosion of a steel material and a zinc material, it is possible to quantitatively evaluate the corrosion rate.

There is also proposed a method of predicting an amount of salt-damage-caused corrosion of a solar photovoltaic power system member using the corrosion sensor described above, and also proposed estimating a sea salt adhesion amount based on a relational chart representing a relationship among humidity, a measured current value, and the salt water adhesion amount (Non patent Literatures 4 and 5).

### [Citation List]

### [Patent Literature]

[PTL 1] JP 2008-157647A
[Non patent Literature]

[NPL 1] JIS Z2371
[NPL 2] JIS K5621
[NPL 3] http://www.nims.go.jp/mdss/corrosion/ACM/ACM1.htm
[NPL 4] Matsushita Technical Journal (Nov. 2002) p79-85
[NPL 5] Materials and Environments, "Evaluation of Corrosivity of Atmosphere by ACM Type Corrosion Sensor" 54, 375-8 (2005)

US 6 132 593 and US 3 840 439 disclose corrosion detecting devices.

### [Summary of Invention]

### [Technical Problem]

However, the JIS Z2371 standard test and JIS K5621 standard test have a problem of poor testing accuracy because of non-coincidence between its testing environment and actual environment.

The ACM corrosion sensor described above is a self-corrosion sensor. Therefore, when a switch 115a in an ON-state is continuously connected to an ammeter (not shown) and used for a long time, a carbon steel plate serving as the substrate corrodes. As a result, an insulating layer peels off and sensor performance cannot be maintained. This disadvantageously results in a short life of the corrosion sensor.

However, accuracy of the ACM corrosion sensor in measuring the corrosion environment deteriorates unless there is any corrosion. Therefore, when corrosion of the sensor is excessively suppressed for views of a longer life of the sensor, there is a problem that measurement of the corrosion environment itself cannot be performed.
Therefore, it has been desired to extend the life of the sensor according to its corrosion environment.

In view of the above problems, an object of the present invention is to provide an outdoor structure including a corrosion detecting device capable of extending a life of a sensor according to a corrosion environment.

### [Solution to Problem]

According to an aspect of the present invention, a corrosion detecting device includes: a corrosion sensor that includes two dissimilar metals isolated from each other; an ammeter that measures a value of a current flowing between the two dissimilar metals; a switch that opens or closes an electric circuit connecting the two dissimilar metals to the ammeter; and a control device that transmits an instruction to turn on the switch only during measurement of the current.

The corrosion detecting device further includes a deterioration-degree determining unit measure a degree of progress of corrosion of the corrosion sensor. the switch is turned on until progress of the corrosion reaches a predetermined threshold.

Advantageously, in the corrosion detecting device, the deterioration-degree determining unit determines a degree of progress of the corrosion on a surface of the corrosion sensor by a color.

Advantageously, in the corrosion detecting device of, the deterioration-degree determining unit determines a degree of progress of the corrosion on a surface of the corrosion sensor by an accumulated quantity of electricity measured by the ammeter.

According to another aspect of the present invention, a corrosion detecting device include: a corrosion sensor that includes two dissimilar metals isolated from each other; an ammeter that measures a value of a current flowing between the two dissimilar metals; and a variable resistance provided between the two dissimilar metals and the ammeter.

Advantageously, the corrosion detecting device further includes an environment monitor that measures an installation environment of the corrosion sensor.

Advantageously, in the corrosion detecting device, the environment monitor is at least one of a hygrometer, a thermometer, and an illuminometer.
According to still another aspect of the present invention, an outdoor structure including any one of the corrosion detecting device described above.

### [Advantageous Effects of Invention]

According to the present invention, it is possible to extend a life of a sensor according to a corrosion environment.

### [Brief Description of Drawings]

[Fig. 1] Fig. 1 is a schematic diagram of a corrosion detecting device installed in an outside structure according to a first embodiment.
[Fig. 2] Fig. 2 is an operational diagram of a state of switching.
[Fig. 3] Fig. 3 is a relational diagram between a measurement time for which a corrosion sensor is used and an accumulated quantity of electricity (coulomb).
[Fig. 4] Fig. 4 is a schematic diagram of a corrosion detecting device installed in an outdoor structure according to a second embodiment.
[Fig. 5] Fig. 5 is a schematic diagram of a container to accommodate a corrosion sensor according to the second embodiment.

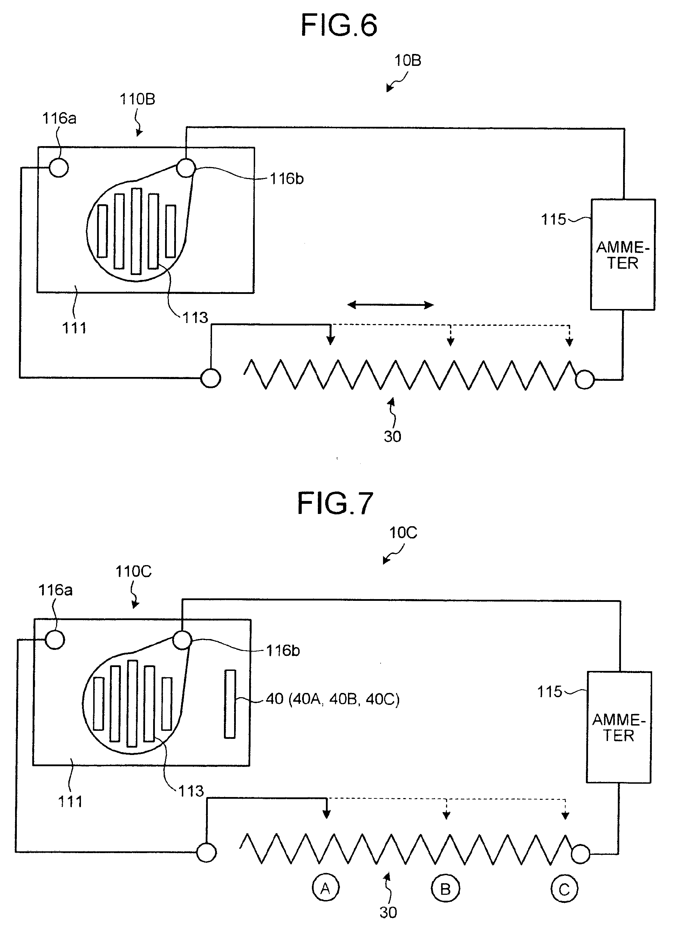

[Fig. 6] Fig. 6 is a schematic diagram of a corrosion detecting device installed in an outdoor structure according to a third embodiment.
[Fig. 7] Fig. 7 is a schematic diagram of a corrosion detecting device installed in an outdoor structure according to the third embodiment.
[Fig. 8] Fig. 8 is an example of a division state of the corrosion sensor according to the first embodiment.
[Fig. 9] Fig. 9 is a plan view of a corrosion sensor according to a conventional technique.
[Fig. 10] Fig. 10 is a schematic diagram of a corrosion sensor according to a conventional technique.
[Fig. 11] Fig. 11 is a schematic diagram of a conventional technique at the time of corrosion.

### [Description of Embodiments]

Exemplary embodiments of the present invention will be explained below in detail with reference to the accompanying drawings. The present invention is not limited to the embodiments. In addition, constituent elements in the following embodiments include those that can easily occur to persons skilled in the art or that are substantially equivalent.

### [First Embodiment]

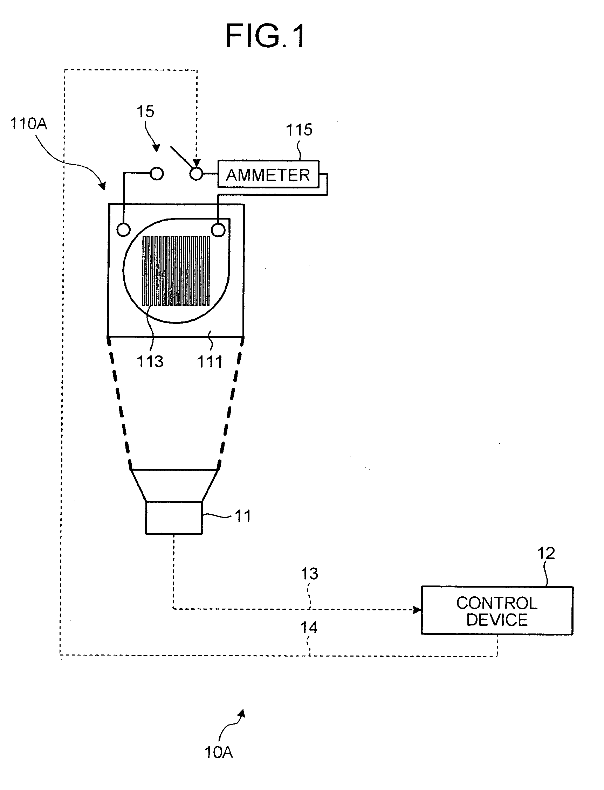

An outdoor structure including a corrosion detecting device according to a first embodiment of the present invention is described with reference to the drawings. Fig. 1 is a schematic diagram of the corrosion detecting device installed in the outside structure according to the first embodiment. As shown in Fig. 1, a corrosion detecting device 10A installed in the outside structure according to the present embodiment includes a corrosion sensor 110A that monitors a corrosion environment, the corrosion 110A that includes two dissimilar metals isolated from each other, the ammeter 115 that measures a value of a current flowing between the two dissimilar metals, a switch 15 that opens or closes an electric circuit connecting the two dissimilar metals to the ammeter 115, and a control device 12 that transmits an instruction to close the switch 15 only during measurement of the current.
Furthermore, in the present embodiment, the corrosion detecting device 10A a deterioration-degree measurement unit 11 that measures a deterioration degree of the corrosion sensor 110A, and the control device 12 executes an instruction to turn on switching only during the measurement when the corrosion sensor 110A is used according to a measurement result of the deterioration-degree measurement unit 11.
In Fig. 1, reference numeral 111 denotes a substrate constituted by, for example, a carbon steel plate and reference numeral 113 denotes a conductive unit made of silver or carbon, for example.

In an initial period of starting to use the corrosion sensor 110A, a passive film of iron oxide or the like is present on some parts of the substrate 111 formed out of a surface of the carbon steel plate. As a result, parts on which corrosion does not build up are present on the substrate of the corrosion sensor 110A. However, as the surface is more covered with red rust (iron hydroxide (III) or the like), the passive film is destroyed.
In the present invention, the surface-deterioration-degree measuring unit 11 determines a degree of progress of corrosion by a change in a color (from silver to brown) of the surface. Specifically, in an initial period of measurement, the color of the surface remains silver, so that the switch is turned on for measurement of corrosion. However, at the time of measuring corrosion after change of the surface color to brown, which change indicates that the passive film is destroyed, the switch 15 is turned on only during measurement. With this operation, any unnecessary current does not flow during a time other than the measurement time, making it possible to extend a life of the corrosion sensor 110A.

That is, the corrosion does not build up on some parts of the surface of the carbon steel plate because of presence of the passive film that is present on a part of the surface of the carbon steel plate. However, as brown red rust grows, then the passive film is destroyed, and corrosion advances with passage of time. Accordingly, when the switch is turned on to keep the circuit connected, then presence of the water film promotes corrosion of the substrate 111, and an error occurs to the measurement result.

Accordingly, a battery circuit is given a junction and the switching is turned on only when the corrosion current is to be measured, thereby suppressing deterioration in the corrosion sensor 110A. As a result, the life of the corrosion sensor 110A can be extended.

The surface-deterioration-degree determining unit 11 is to irradiate, for example, a reference emission light onto a surface of the corrosion sensor 110A and to analyze a spectrum of reflected light. As the surface-deterioration-degree determining unit 11, a commercially available device such as "color analyzer" or "color difference meter" can be used.
Alternatively, a photodetector or the like including a spectral unit (a function to be able to divide wavelength), for example, can be used as the surface-deterioration-degree determining unit 11 in place of the color analyzer.

At the time of determining the deterioration degree of the corrosion sensor, it is possible, for example, to divide an inspection region into a plurality of regions and to determine the deterioration degree in every divided region.
When the surface color changes to predetermined brown, the surface-deterioration-degree determining unit 11 transmits information 13 indicating the change in the surface color to the predetermined brown to the control device 12.

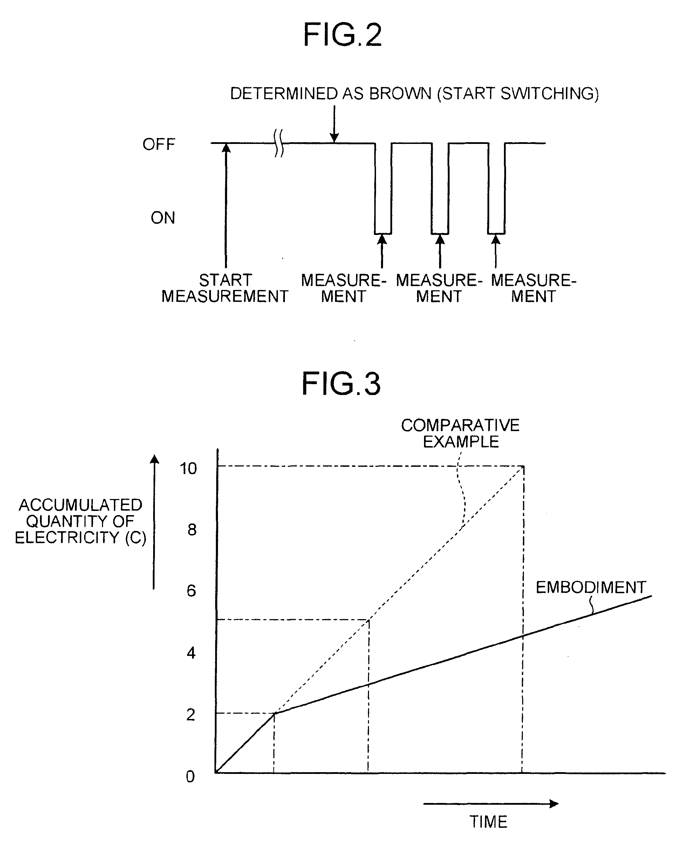

Fig. 2 is an operational diagram of a state of switching. As shown in Fig. 1, the control device 12 transmits an instruction 14 indicating start of switching to the switch 15, and is designed to transmit an instruction of switching ON to the switch 15 whenever the corrosion current is measured.

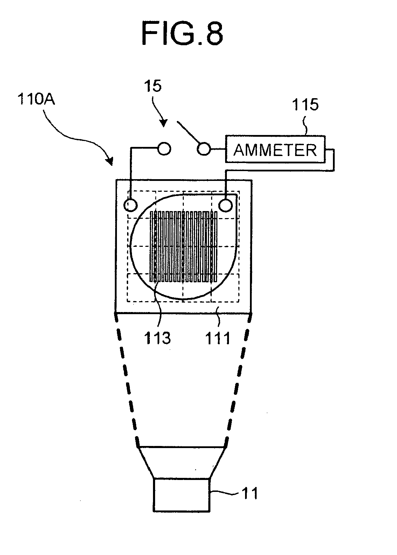

Fig. 8 is an example of a division state of the corrosion sensor according to the first embodiment.
As shown in Fig. 8, a measurement region of the corrosion sensor 110A is divided into, for example, 16 regions, an RGB value is measured in every divided region, and it is determined whether the surface color is the predetermined brown. Note that the number of divided regions is not limited to any specific number but can be appropriately changed to numbers such as 4, 8, and 12.
When the ratio of determining that the surface color is the predetermined brown exceeds 50%, the switching function (ON/OFF function) of the corrosion sensor 110A is set valid (ON).

In this measurement, when the surface-deterioration-degree determining unit 11 is a color analyzer having a color sensor for R (red), G (green), and B (blue), the switching function is turned on when an RGB measurement result indicates that the color is near a brown (JIS common color name) value (R (115): G (78): B (48)).

Fig. 3 is a relational diagram of a relationship between a measurement time for which the corrosion sensor is used and an accumulated quantity of electricity (coulomb). As shown in Fig. 3, according to the present embodiment, the surface-deterioration-degree determining unit 11 determines the degree of progress of corrosion by the color (change from silver to brown). Accordingly, at the time of measuring corrosion thereafter, the switching is turned on only during measurement. With this operation, differently from a comparative example of a conventional technique, it is possible to prevent the switch from always being in an (ON-state, prevent an unnecessary current from flowing, and prevent corrosion from advancing beyond control. As a result, the life of the corrosion sensor can be extended.

Specifically, when the corrosion current is measured at intervals of, for example, 10 minutes, then the switch is turned on only at the time of measurement, and a time for which the circuit is closed is set to about 5 seconds.
Therefore, for a remaining time, the circuit is not connected, so that corrosion of the substrate 111 does not advance and the life of the corrosion sensor 110A can be extended.

With this configuration, when the corrosion sensor cannot be replaced until, for example, a tanker returns to a homeport once it is out at sea, it is possible to monitor the corrosion environment for a long period of time without need to replace the sensor by extending its life.

### [Second Embodiment]

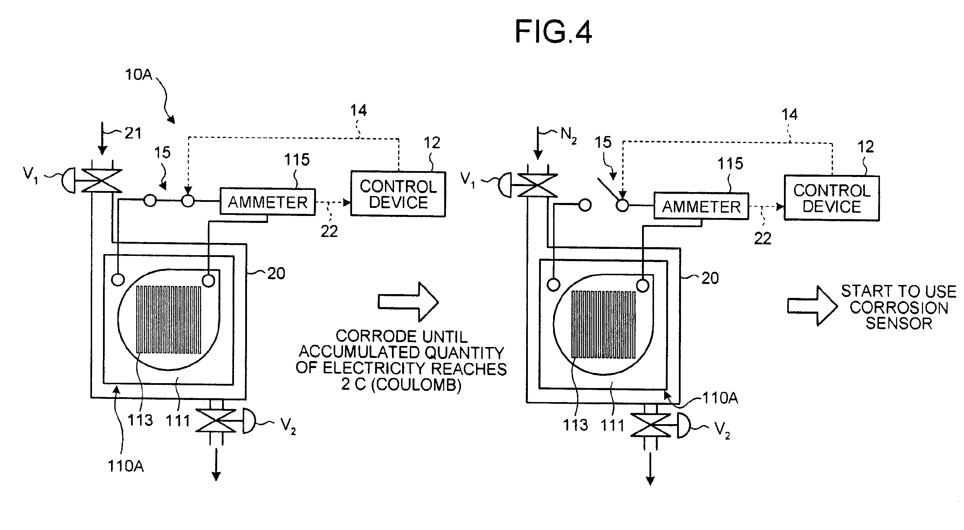

An outdoor structure including a corrosion detecting device according to a second embodiment of the present invention is described with reference to the drawings. Fig. 4 is a schematic diagram of a corrosion detecting device installed in the outdoor structure according to the second embodiment.
As shown in Fig. 4, a corrosion detecting device 10A according to the present embodiment includes the corrosion sensor 110A that monitors a corrosion environment and the control device 12 that determines a deterioration degree of the corrosion sensor 110A by an accumulated quantity of electricity, and that transmits an instruction indicating that switching is turned on only during measurement when the corrosion sensor is used according to a determination result.

In the first embodiment, at the beginning of measurement, switching is turned on by determining the color after waiting until corrosion advances to some extent. In the second embodiment, switching is allowed to be turned on from the beginning of measurement. To this end, initial corrosion is promoted.

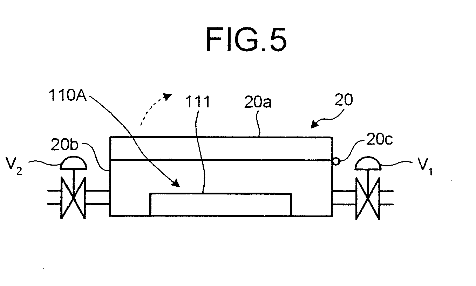

Fig. 5 depicts a state of corrosion by putting the corrosion sensor 110A into a container 20. In Fig. 5, reference character 20a denotes a lid portion, 20b denotes a container main unit, and 20c denotes a hinge portion.
Specifically, as shown in Figs. 4 and 5, the corrosion sensor 110A is put into the container 20, the lid portion 20a is put on, a valve V₁ is opened, and water 21 is introduced into the container 20. This introduced water 21 enables the corrosion sensor 110A to actively corrode. However, note that a threshold of the corrosion degree is set to a period until the accumulated quantity of electricity, which is measured by the ammeter 115, is 0.5 C (coulomb) to 2 C.

Moreover, at a timing at which the accumulated quantity of electricity is equal to 0.5 C (coulomb) to 2 C, a valve V₂ is opened and the internal water 21 is drained. After draining the water 21, nitrogen (N₂) is introduced into the container 20 to perform nitrogen purge therein so as to prevent corrosion from further advancing as much as possible. This nitrogen purge can keep the corrosion sensor 110A in a state of humidity equal to or lower than that of outside and prevent corrosion from advancing.
At the start of using the corrosion sensor 110A, the lid portion 20a is taken off and measurement is started.
In Fig. 4, reference numeral 22 denotes an information signal from the ammeter 115 to the control device 12.

At an initial period of starting to use the corrosion sensor 110A, parts covered with a hard passive film are present on a surface of a carbon steel plate that is a substrate. Accordingly, when the corrosion environment is mild, then the corrosion current is low, and accuracy in measured value often deteriorates. Therefore, in the present embodiment, the initial corrosion is promoted in advance so as to be able to measure a true corrosion current right after starting to use the corrosion sensor 110A.
However, when corrosion is excessively promoted, corrosion advances. The threshold of the accumulated quantity of electricity is, therefore, set to about 2 C (coulomb) that is a threshold of initial corrosion.

### [Reference Signs List]

- 10A, 10B, 10C: corrosion detecting device
- 110, 110A, 110B: corrosion sensor
- 11: surface-deterioration-degree determining unit
- 20: container
- 40: environment monitor
- 40A: hygrometer
- 40B: thermometer
- 40C: illuminometer

## Claims

1. A corrosion detecting device (10A; 10B; 10C) comprising:
a corrosion sensor (110; 110A; 110B) that includes two dissimilar metals isolated from each other;
an ammeter (115) that measures a value of a current flowing between the two dissimilar metals;
a switch (15) that opens or closes an electric circuit connecting the two dissimilar metals to the ammeter (115); the corrosion detecting device being **characterized in that** it further comprises:
a control device (12) that transmits an instruction to turn on the switch (15) only during measurement of the current, and
a deterioration-degree determining unit (11) that measures a degree of progress of corrosion of the corrosion sensor (110; 110A; 110B), wherein the switch (15) is turned on until progress of the corrosion reaches a predetermined threshold.

2. The corrosion detecting device (10A; 10B; 10C) of Claim 1, wherein the deterioration-degree determining unit (11) determines a degree of progress of the corrosion on a surface of the corrosion sensor (110; 110A; 110B) by a color.

3. The corrosion detecting device (10A; 10B; 10C) of Claim 1, wherein the deterioration-degree determining unit (11) determines a degree of progress of the corrosion on a surface of the corrosion sensor (110; 110A; 110B) by an accumulated quantity of electricity measured by the ammeter (115).

4. An outdoor structure including the corrosion detecting device (10A; 10B; 10C) of any one of Claims 1 to 3.

## Patentansprüche

1. Korrosionsdetektionsvorrichtung (10A; 10B; 10C), umfassend:
einen Korrosionssensor (110; 110A; 110B), der zwei verschiedene Metalle umfaßt, die voneinander getrennt sind,
einen Strommesser (115), der einen Wert eines Stroms mißt, der zwischen den beiden verschiedenen Metallen fließt,
einen Schalter (15), der einen elektrischen Schaltkreis, der die beiden verschiedenen Metalle mit dem Strommesser (115) verbindet, öffnet oder schließt, wobei die Korrosionsdetektionsvorrichtung **dadurch gekennzeichnet ist, daß** sie ferner umfaßt:
eine Steuervorrichtung (12), die eine Anweisung überträgt, den Schalter (15) nur während der Messung des Stroms anzuschalten, und
eine Verschleißgradbestimmungseinheit (11), die einen Grad des Fortschrittes der Korrosion des Korrosionssensors (110; 110A; 110B) mißt, wobei der Schalter (15) angeschaltet wird, bis der Fortschritt der Korrosion einen vorbestimmten Schwellenwert erreicht.

2. Korrosionsdetektionsvorrichtung (10A; 10B; 10C) nach Anspruch 1, wobei die Verschleißgradbestimmungseinheit (11) einen Grad des Fortschrittes der Korrosion auf einer Oberfläche des Korrosionssensors (110; 110A; 110B) mittels einer Farbe bestimmt.

3. Korrosionsdetektionsvorrichtung (10A; 10B; 10C) nach Anspruch 1, wobei die Verschleißgradbestimmungseinheit (11) einen Grad des Fortschrittes der Korrosion auf einer Oberfläche des Korrosionssensors (110; 110A; 110B) mittels einer durch den Strommesser (115) gemessenen akkumulierten Menge an Elektrizität bestimmt.

4. Freiluftanordnung, umfassend die Korrosionsdetektionsvorrichtung (10A; 10B; 10C) nach einem der Ansprüche 1 bis 3.

## Revendications

1. Dispositif de détection de corrosion (10A ; 10B ; 10C) comprenant :
un capteur de corrosion (110 ; 110A ; 110B) qui comprend deux métaux dissemblables isolés l'un de l'autre ;
un ampèremètre (115) qui mesure une valeur d'un courant circulant entre les deux métaux dissemblables ;
un commutateur (15) qui ouvre ou ferme un circuit électrique connectant les deux métaux dissemblables à l'ampèremètre (115) ; le dispositif de détection de corrosion étant **caractérisé en ce qu'**il comprend en outré :
un dispositif de commande (12) qui transmet une instruction pour fermer le commutateur (15) uniquement pendant la mesure du courant, et
une unité de détermination de degré de détérioration (11) qui mesure un degré de progression de la corrosion du capteur de corrosion (110 ; 110A ; 1108), dans lequel le commutateur (15) est fermé jusqu'à ce que la progression de la corrosion ait atteint un seuil prédéterminé.

2. Dispositif de détection de corrosion (10A ; 10B ; 10C) selon la revendication 1, dans lequel l'unité de détermination de degré de détérioration (11) détermine un degré de progression de la corrosion sur une surface du capteur de corrosion (110 ; 110A ; 110B) par une couleur.

3. Dispositif de détection de corrosion (10A ; 10B ; 10C) selon la revendication 1, dans lequel l'unité de détermination de degré de détérioration (11) détermine un degré de progression de la corrosion sur une surface du capteur de corrosion (110 ; 110A ; 110B) par une quantité d'électricité accumulée mesurée par l'ampèremètre (115).

4. Structure extérieure comprenant le dispositif de détection de corrosion (10A ; 10B ; 10C) selon l'une quelconque des revendications 1 à 3.
